# EUROPEAN PATENT SPECIFICATION

(11) **EP 1 496 008 B1**
(45) Date of publication and mention of the grant of the patent: **26.05.2010**
(21) Application number: 04445075.7
(22) Date of filing: 05.07.2004
(51) Int. Cl.: B66F 9/10, F16P 5/00

(54) **Device at truck**
Vorrichtung an einem Flurförderzeug
Dispositif à chariot élévateur

(30) Priority: 11.07.2003 SE 0302081
(43) Date of publication of application: 12.01.2005
(73) Proprietor: BT Industries Aktiebolag, S-59581 Mjölby (SE)
(72) Inventor: Alveteg, Magnus, Borensberg (SE); Bejgrowicz, Anders, 582 74 Linköping (SE)
(74) Representative: Berglund, Erik Wilhelm

(56) References cited:
- EP-A- 1 110 904
- US-A- 2 910 204
- US-A- 3 526 330
- US-A- 4 392 772
- US-B1- 6 517 307

## Description

This invention is related to industrial trucks, and then in particular trucks where the forks are swingable or pivotable in order to be able to take and deliver loads laterally in relation to the truck. When the forks are directed laterally they are to start with to the side of the looking direction of the driver and it is therefor not certain that the driver always knows exactly where he has the fork tips or think of these. Secondly when a truck of this kind turns, for instance, in transit from one shelf alley to another, one of the fork tips will move along a path that is further out than any other part of the truck. Taken together this means that there is a non-negligible risk that the tips of the forks hook into either a part of a shelf or another truck etc. Since the load forks and the mounting of these essentially are built to take a load the forces occurring at such an occasion will have a direction that the lifting system of the truck for lifting purposes has not been dimensioned for. In reality this normally means that the fork carrier or some other part is dimensioned too weak to handle the forces that may arise on the forks in a lateral direction, which in turn can result in costly repairs and in particular in stand still times that may seriously influence the flow capacity in and out for a warehouse.

An alternative is of course to make the parts that tend to brake stronger in the usual manner so that the fork mounting becomes more resistant against lateral movements, this however has the drawback that the weight of the construction increase, which in turn means that the load capacity is reduced, alternatively that the truck to a great extent has to have its dimensions increased.

US 2,910,204 A discloses an industrial truck comprising a vertical mast and a member mounted on the mast for vertical movement. A load supporting carriage for the truck comprises a platform to be secured to the member. There is a secondary mast on the platform and the support is movably mounted on the mast. A slide member is mounted on the support for transverse horizontal movement laterally of the platform and a load engaging member is pivotally secured to the slide member for swinging movement.

The damages that can occur at unintentional contacts or collisions with the fork tips can result in damages without the driver noticing or realizing this and therefor not calling for check and service, which in the end may result in the fork mounting breaking during work, that is loads may be dropped, which is very serious.

In view of the above problems the object of the invention is to increase the protection and safety of load forks as regards laterally on these acting forces.

In accordance with the invention this object is solved by the features of claim 1, and provides a device defining the intended end position of the fork swing or pivoting, which device includes a breakpin or other means that yields at the reaching of a definite influencing force. If the force in the movement is sufficiently large to cut the breakpin the thereafter remaining force and movement respectively is taken by the fork supporting parts in the shape of fork carrier, initial lift mast, mast holder and not least the guides for the lateral movements of the mastholder relative the truck etc. and possible between these arranged stops and movement limitations. In the best case these spring away resiliently, then after the collision to spring back without being damaged. If however too large forces arise the weakest dimensioned part will yield and deform.

Many times the fork contact will occur at the extreme end thereof and already a small additionally swing or pivot angle of the forks will allow the contacting fork to slip past the obstacle. In these cases it is not certain that the driver observes the collision when it occurs, which, as has been said above, may mean considerable risks if something breaks. Since at the invention the end position is defined by the breakpin provided stop it is possible, by dimensioning the breakpin according to the collision force that can be taken by all parts, to know, at the invention, that as long as the breakpin does not brake the collision has not caused any damage. If the breakpin has been broken damages may have resulted, furthermore the forks will in the end position have a swaying and more undefined position drawing the drivers attention and service personnel can be called to change breakpin, and check if damages have occurred and in this case take care of these.

Further advantages and characteristics of the invention are apparent from the enclosed patent claims and the following description of a preferred embodiment of the invention shown in the drawings.

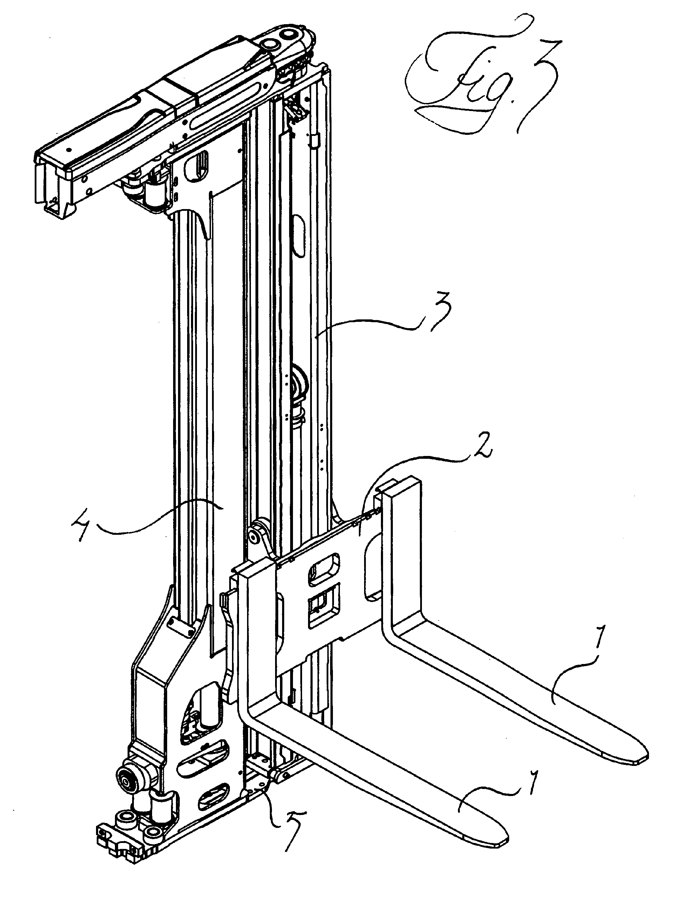

In the drawings Fig.1 and 2 show a truck provided with pivotable or swingable forks, fig 3 a part of this truck and fig 4 an end position stop, in accordance with the invention, for the pivoting or swing movement of the forks.

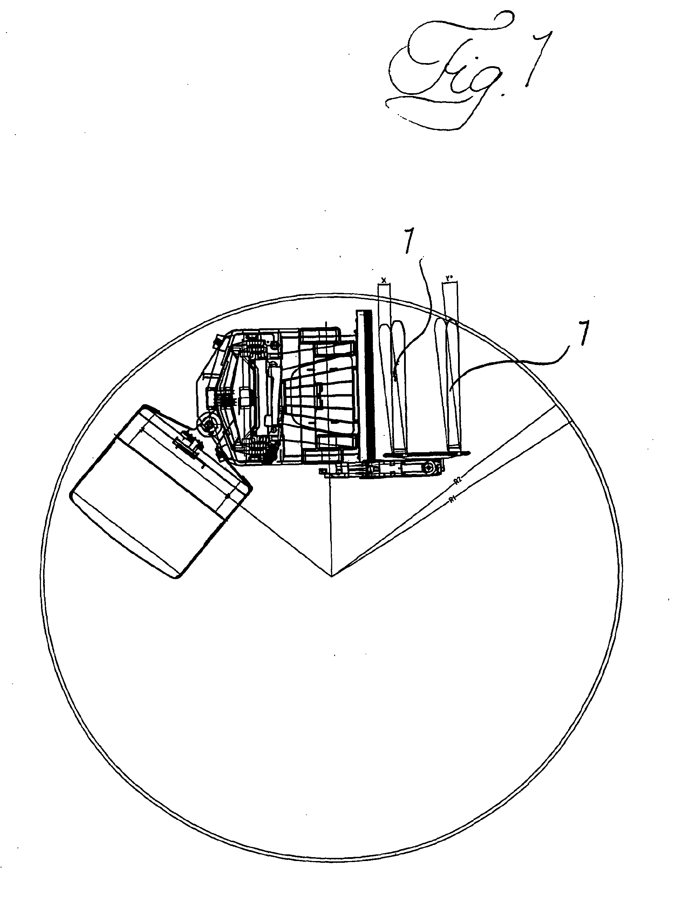

The truck shown in the drawings is a so called narrow alley truck that picks up and deliver loads laterally to and from shelves located on each side of the truck. As the truck moves in these alleys normally particular mechanical lateral guides or electric/electronic lope guide prevents the truck from coming in contact with the shelf structure. When however the truck is moved outside of these alleys and in particular is turning an outer fork tip will as seen in fig 1 move outside of the movement path of the rest of the truck and it will therefor run a greater risk of colliding or hooking into other objects.

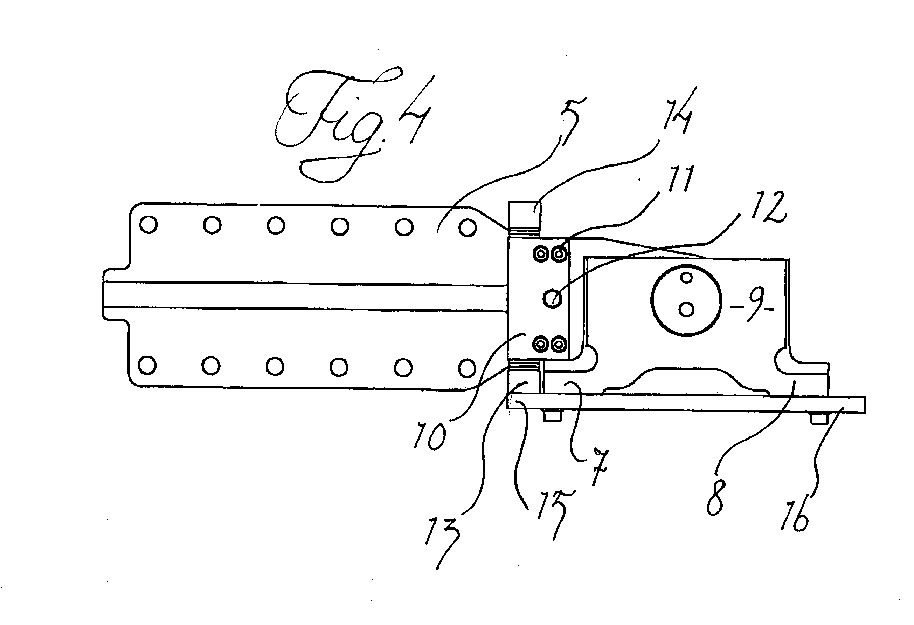

The load forks 1 are supported in a fork carrier 2, that is journaled movable heightwise in an initial lift mast 3, that in turn is pivotable 180° from one side to the other in a frame holder 4. The frame holder is arranged moveable laterally on the lift cage of the truck, which cage is moveable heightwise on the main mast of the truck. In order to achieve well defined and stable end positions stops are arranged for the end positions. This stop is as is apparent from fig 4 so made that it constitutes stop for movement in one direction as well as in the other direction although contact is against different sides of the stop. The stop includes principally a block fastened to a lower support arm 5 that in its outer end has a pivot bearing for the initial lift mast 3 hanging in an upper arm.

Against the stop on the support arm stops arranged on the moveable initial mast bottom plate 9 can abut and these positions correspond to a swing or pivot movement area of 180° and are also adjusted to be perpendicular to the length direction of the truck. The block 10 is by means of screws 11 in elongate holes fastened laterally moveable on the arm 5. The block 10 is centered and locked against lateral movement by a breakpin 12.

If the breakpin 12 breaks due to too large lateral force influence on a fork tip the stop block continue to move until the fork carrier abut against the frame holder 4 and thereby prevents further movement. In most cases this additionally available movement is enough for the fork tip to elastically to pass the obstacle. Since the forks are comparatively long also a moderate extra pivot angle result in a frequently sufficient diameter reduction of the fork tips, as is apparent from fig 1.

If the driver does not immediately discover that the breakpin has been broken he will however realize that this is the case since the load fork becomes wobbly in the longitudinal direction, however not so that there are any risks due to the wobbling as such, however the precision at aligning of the load fork is impaired. If so is desired one can also consider arranging the breakpin in such a way or provided with suitable indication means causing the driver immediately to discover if the breakpin has been cut off.

The screws 11 of the stop 10 has as their object to secure the stop at normal handling and to prevent the stop from falling off if the breakpin breaks. The holes of the screws are so large that they are not cut before the fork carrier abuts the frame holder.

In order, if possible, to dampen the movement after the breaking of the breakpin spring means may be arranged to provide a resilient movement of the forks after the cutting of the breakpin. In accordance with the shown embodiment this is achieved by the pivotable initial lift mast in the upper end being provided with unyielding end position stops for the pivot movement corresponding to the lower stop so that when the breakpin has been broken an upper (not shown) stop has already come in contact with a corresponding stop on the pivotable initial lift mast, so that the initial lift mast in itself will function as a torsion spring.

The principle at collision is that initially the fork deflect resiliently to the extent that the resilience of the construction allows. If this is not enough the breakpin breaks and the collision forces are then successively transferred via the initial lift mast as torsion spring to the upper stop during a continued turning of the forks. Finally the fork carrier itself abuts the frame holder and force is transferred also this way. Since the initial lift mast during the movement until the fork carrier strike against the frame holder has been pretensioned the striking of the fork carrier does not have to take up all remaining collision force but the upper part of initial mast, frame holder and the fastening of this will also take up a part of the force. To this comes of course the braking work that the initial lift mast has braked with when it has been pretensioned through turning.

It is possible to consider the stop in the upper end of the initial lift mast also including a breakpin and possibly further spring means.

Since driving outside of the alleys normally take place with the forks in the vicinity of or in the lower most position of these the entire height of the initial lift mast may be used for the resilience. The yielding part of the initial mast is then reduced with increasing height of the forks.

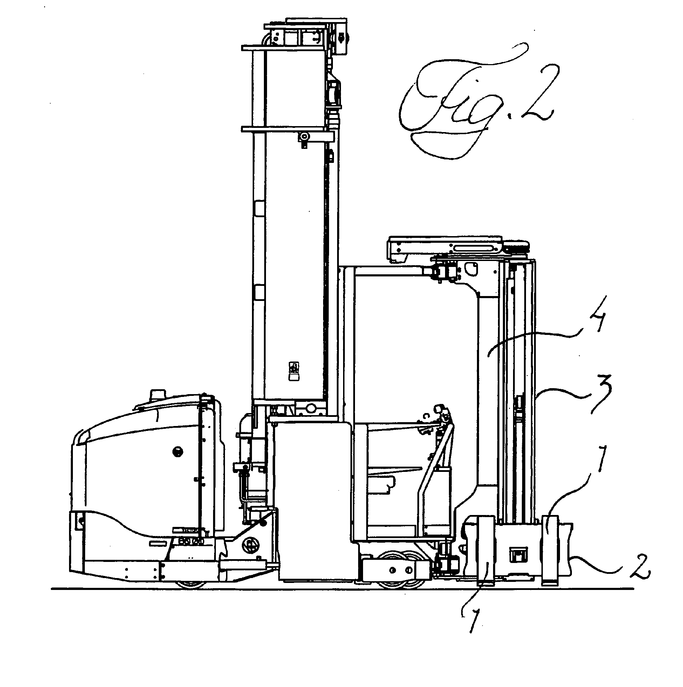

As is apparent from fig 2 the stop also includes two buffers 13, 14 one for each direction of turning, that come in contact with abutment areas 15, 16 on the pivotable initial lift mast before the precise end positions after compression of the buffer in question are reached with the stops 7 or 8 in contact directly against the stop block 10. These end positions coincide with those of a stop in the upper end of the initial lift mast. The buffers of the lower stop provides a soft damping of the pivot movement close to the end positions of this and provide at the same time a certain pretensioning of the initial lift mast, since the turning or pivoting means of the initial lift mast are arranged in the upper end of this.

Within the frame of the invention one can further consider the arranging of breakpins or corresponding means at other locations in the force transfer, as well as that resilience and following stops are constituted by other means or parts in the movement mechanics that naturally limit the pivot movement of the forks. For instance one can since a possible pivot movement advantageously is propelled hydraulically, consider that the damping of the movement after the cutting of the breakpin takes place by means of corresponding hydraulic means that in the normal case when accidents of this kind occur are inactive.

The breakpin provided stop can instead of as described above be arranged at the upper end of the initial lift mast bringing the advantage that the torsion movement in the initial lift mast can be used to provide elastic deflection before the breakpin is broken. It is also possible to have a stronger breakpin in the upper stop and a weaker in the lower one so that at subsequent service it is easier to know which part that has to be checked or possibly exchanged. Through suitable dimensioning it is also conceivable that the driver may be permitted to change the lower breakpin himself, but not the upper.

Since the stop and the breakpin are the same for movement to the left as well as to the right both end positions will be wobbly causing the driver to notice this even if the following handling takes place on the side where the collision did not occur.

As is apparent from the above embodiment the invention provide a considerably improved protection against damages and risks resulting from lateral influence on load forks. Furthermore the invention provides a good monitoring of if damages have occurred or not.

Instead of one breakpin or several one can consider using other means that at the transgressing of a certain force or torque yields, for instance one can consider that the stop is held in place by friction. This has in the case with one stop for both sides also the advantage that an exceeding of the maximum force that the stop can take moves this so that in particular the opposite stop position will be mispositioned and can thereby bring the drivers attention to what has happened. Furthermore in this case the stop continue to brake the movement during the continued movement further reducing the risk of remaining damages.

## Claims

1. Lift truck including laterally between end positions pivotable forks (1) where the end positions of the pivot movement are defined by one or several stops, **characterized in that** at least one (10, 12) includes one limiting means (12) that yields at the reaching of a definite influencing force and is arranged to limit force in the transfer direction and **in that** the truck is so arranged that when the maximum force defined by the limiting means (12) has been exceeded a certain amount of further pivot movement is possible past the defined end position of the pivot movement.

2. Lift truck according to claim 1, **characterized in that** the stop is constituted by a stop block (10) which is moveable fastened by for instance screws (11) and that a through breakpin (12) controls the position of the stop block (10).

3. Lift truck according to claim 1 or 2, **characterized in that** the same stop and/or breakpin (12) is used for both of the directions of movement.

4. Lift truck according to any of the preceding claims, **characterized in that** an elastic deflection or damping is arranged in the area of movement after passing of the defined end position.

5. Lift truck according to claim 4, **characterized in that** the resilient deflection consists of the torsion in an initial lift mast (3) executing the pivot movement and supporting the forks (1), with the breakpin (12) arranged in connection with a lower or upper journaling of the initial lift mast (3) and that more or less parallel unyielding end stops are arranged in the other end of the initial lift mast.

6. Lift truck according to claim 4, **characterized in that** stops with limited force take up are arranged in the upper- as well as the lower end of the initial lift mast.

7. Lift truck according to any of the preceding claims, **characterized in that** the force transfer limiting stop includes buffer means (13, 14, 15, 16) for a resilient and the movement mechanics pretensioning final movement to the intended end position.

## Patentansprüche

1. Hub-Flurförderzeug, welches in Querrichtung zwischen Endpositionen schwenkbare Gabeln (1) umfasst, wobei die Endpositionen der Schwenkbewegung durch einen oder mehrere Anschläge definiert werden, **dadurch gekennzeichnet, dass** wenigstens eine (10, 12) eine Begrenzungseinrichtung (12) umfasst, weiche beim Erreichen einer definierten Einwirkungskraft wirksam wird und die derart ausgelegt ist, dass die Kraft in Transportrichtung begrenzt wird, und dass das Flurförderzeug derart ausgelegt ist, dass dann, wenn die maximale Kraft, die durch die Begrenzungseinrichtung (12) definiert wird, überschritten wird, in einem gewissen Grad eine weitere Schwenkbewegung über die Endposition der Schwenkbewegung hinaus zugelassen ist.

2. Hub-Flurförderzeug nach Anspruch 1, **dadurch gekennzeichnet, dass** der Anschlag von einem Anschlagblock (10) gebildet wird, welcher beispielsweise mit Hilfe von Schrauben (11) beweglich festgelegt ist, und dass ein Durchbruchbolzen (12) die Position des Anschlagblocks (10) steuert.

3. Hub-Fturförderzeug nach Anspruch 1 oder 2, **dadurch gekenntzeichnet, dass** ein und derselbe Anschlag und/oder ein und derselbe Durchbruchbolzen (12) für beide Bewegungsrichtungen genutzt wird.

4. Hub-Flurörderzeug nach einem der vorangehenden Ansprüche, **dadurch gekennzeichnet, dass** eine elastische Auslenkung oder eine Dämpfung in dem Bereich der Bewegung vorgesehen ist, der sich nach dem Überschreiten der definierten Endposition ergibt.

5. Hub-Flurförderzeug nach Anspruch 4, **dadurch gekenntzeichnet, dass** die federnd nachgiebige Auslenkung von einer Torsion bei einem Anfangshubmast (3) gebildet ist, welcher eine Schenkbewegung ausführt und die Gabeln (1) trägt, wobei der Durchbruchbolzen (12) in Verbindung mit einer unteren oder oberen Lagerung des Anfangshubmasts (3) vorgesehen ist, und dass mehr oder weniger parallele unnachgiebige Endanschläge am jeweils anderen Ende des Anfangshubmasts angeordnet sind.

6. Hub-Flurförderzeug nach Anspruch 4, **dadurch gekennzeichnet, dass** die Anschläge mit begrenzter Kraftaufnahme sowohl am oberen als auch am unteren Ende des Anfangshubmasts angeordnet sind.

7. Hub-Flurförderzeug nach einem der vorangehenden Ansprüche, **dadurch gekennzeichnet, dass** der Kraftübertragungs-Begmnzungsanschlag Puffereinrichtungen (13, 14, 15, 16) für ein federnd nachgiebiges Verhalten umfasst, und dass die Bewegungsmechanik eine Vorspannung für die abschließende Bewegung zu der bestimmten Endposition bereitstellt.

## Revendications

1. Chariot élévateur comprenant latéralement des fourches pivotantes (1) entre des positions d'extrémité, où les positions d'extrémité du mouvement de pivot sont définies par une ou plusieurs butées, **caractérisé en ce qu'**au moins l'une (10, 12) comprend un moyen de limitation (12) qui cède lorsqu'il a atteint une force d'influence définie et est agencé pour limiter la force dans la direction de transfert et **en ce que** le chariot est agencé de sorte que lorsque la force maximum définie par les moyens de limitation (12) a été dépassée, une certaine quantité de mouvement de pivot supplémentaire est possible au-delà de la position d'extrémité définie du mouvement de pivot.

2. Chariot élévateur selon la revendication 1, **caractérisé en ce que** la butée est constituée par un bloc de butée (10) qui est fixée de manière mobile par exemple avec des vis (11) et **en ce qu'**un boulon de cisaillement débouchant (12) contrôle la position du bloc de butée (10).

3. Chariot élévateur selon la revendication 1 ou 2, **caractérisé en ce que** la même butée et/ou boulon de cisaillement (12) est(sont) utilisé(e)(s) pour les deux directions de déplacement.

4. chariot élévateur selon l'une quelconque des revendications précédentes, **caractérisé en ce qu'**une déflexion élastique ou amortissement est agencé dans la zone de mouvement après avoir passé la position d'extrémité définie.

5. Chariot élévateur selon la revendication 4, **caractérisé en ce que** la déflexion élastique consiste en une torsion d'un mât élévateur initial (3) réalisant le mouvement de pivot et supportait les fourches (1), avec le boulon de cisaillement (12) agencé conjointement à un tourillon inférieur ou supérieur du mât élévateur initial (3) et **en ce que** plus ou moins de butées d'extrémité inflexibles parallèles sont agencées dans l'autre extrémité du mât élévateur initial.

6. Chariot élévateur selon la revendication 4, **caractérisé en ce que** les butées avec une prise de force limitée sont agencées dans l'extrémité supérieure ainsi que dans l'extrémité inférieure du mât élévateur initial.

7. chariot élévateur selon l'une quelconque des revendications précédentes, **caractérisé en ce que** la butée de limitation de transfert de force comprend des moyens de tampon (13, 14, 15, 16) pour une mécanique élastique et de mouvement effectuant la pré-tension du mouvement final par rapport à la position d'extrémité prévue.
